(19) Europäisches Patentamt
European Patent Office
Office européen des brevets

(11) EP 1 988 123 B1

(12) **EUROPEAN PATENT SPECIFICATION**

(45) Date of publication and mention of the grant of the patent:
**21.04.2010 Bulletin 2010/16**

(21) Application number: **07714616.5**

(22) Date of filing: **20.02.2007**

(51) Int Cl.:
***C08L 29/04*** (2006.01) ***C08G 81/02*** (2006.01)
***C08L 33/26*** (2006.01) ***C09J 129/04*** (2006.01)
***C09J 133/26*** (2006.01) ***D21H 19/58*** (2006.01)
***D21H 19/60*** (2006.01)

(86) International application number:
**PCT/JP2007/053116**

(87) International publication number:
**WO 2007/097349 (30.08.2007 Gazette 2007/35)**

(54) **RESIN COMPOSITION AND USE THEREOF**

HARZZUSAMMENSETZUNG UND IHRE VERWENDUNG

COMPOSITION DE RESINE ET SON UTILISATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.02.2006 JP 2006048042**

(43) Date of publication of application:
**05.11.2008 Bulletin 2008/45**

(73) Proprietor: **The Nippon Synthetic Chemical Industry Co., Ltd.**
**Osaka-shi,**
**Osaka 531-0076 (JP)**

(72) Inventors:
- **ONO, Hiroyuki**
  **Osaka-shi, Osaka 531-0076 (JP)**
- **MANDAI, Shusaku**
  **Osaka-shi, Osaka 531-0076 (JP)**
- **EDASAWA, Katsumi**
  **Osaka-shi, Osaka 531-0076 (JP)**

(74) Representative: **HOFFMANN EITLE**
**Patent- und Rechtsanwälte**
**Arabellastrasse 4**
**81925 München (DE)**

(56) References cited:
**JP-A- 07 198 945**
**JP-A- 09 324 095**
**JP-A- 10 287 711**
**JP-A- 53 142 496**
**JP-A- 54 020 090**
**JP-A- 61 216 800**
**JP-A- 62 156 000**
**JP-A- 2003 003 029**
**JP-A- 2003 237 241**
**JP-A- 2004 151 130**
**JP-A- 2004 168 853**
**JP-A- 2005 163 031**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to polyvinyl alcohol-based resin composition and resin compositions thereof and use thereof. More particularly, the invention relates to resin compositions having a high crosslinking rate and being able to give a crosslinked product having an excellent waterproof, a heat-sensitive recording medium having an excellent waterproof, and a polarizing film exhibiting excellent adhesion between a polarizer and a protective film.

### Background Art

Polyvinyl alcohol-based resins (hereinafter, polyvinyl alcohol is abbreviated as "PVA") are widely used in dispersants, emulsifiers, suspension agents, fiber processing agents, paper coating, binders, adhesives, films, and the like, because of their superior water solubility, surface-activate ability, film properties (such as film formability, film strength, and oil resistance), and the like. While the PVA-based resin is water-soluble, it is often required to show a high waterproof in several applications. Accordingly, extensive studies to improve the waterproof of PVA-based resin have been investigated.

For instance, modified PVA resins containing reactive functional group which shows good waterproof when utilized with suitable crosslinking agent, are proposed. Representatives of the above-mentioned modified PVA are those containing active hydrogen-containing functional group such as acetoacetyl group or diacetone group.

One of the good examples of above mentioned crosslinking agent is a hydrazine compound, which has a good compatibility with PVA-based resin, and has superior reactivity with an active hydrogen-containing functional group. One example is so-called "honeymoon type" adhesive comprised of an acetoacetyl group-containing PVA-based resin and a hydrazine compound (see e.g. patent document 1). Another example is a waterproof resin composition comprised of a diacetone group-containing PVA-based resin and N-amino poly(acrylamide) (polyacrylic acid hydrazide) (see e.g. patent document 2).

In addition to the above examples, a heat-sensitive recording medium (see e.g. patent document 3) with a heat-sensitive color-forming layer and a protective layer containing a resin composition comprised of acetoacetyl group-containing PVA-based resin, and a specific amine compound represented by $R\text{-}[(CH_2)_n\text{-}NHR^1]_m$ (where R is an aromatic ring, an alicycle, or a heterocycle, $R^1$ is a hydrogen or an alkyl group, n is 0 or a positive integer, and m is a positive integer) is proposed (see patent document 3). A polarizing film, of which the adhesive between a polarizer and a protective film is comprised of aforementioned resin composition, is also proposed (see patent document 4).

Patent document 1: Japanese Unexamined Patent Publication No. Sho 61-78883
Patent document 2: Japanese Unexamined Patent Publication No. Hei 9-324095
Patent document 3: Japanese Unexamined Patent Publication No. 2003-237241
Patent document 4: Japanese Unexamined Patent Publication No. 2004-151130

### Disclosure of the Invention

### Problems to be Solved by the Invention

The patent document 1 discloses the crosslinking reaction of an acetoacetyl group-containing PVA-based resin and a hydrazine compound has a high crosslinking rate but gives a crosslinked product that has an insufficient waterproof. The aforementioned insufficient waterproofness is likely due to the extremely high reaction rate between acetoacetyl group and hydrazide group, results in unequalness of the crosslinking density of cured resin composition. The part with the small crosslinking density causes to deteriorate the waterproof of the crosslinked product.

The patent document 2 discloses the crosslinking reaction of a diacetone group-containing PVA-based resin and N-amino poly(acrylamide) gives a certain waterproof. The rate of the crosslinking reaction, however, is so slow that the above mentioned combination cannot be applied to so-called "honeymoon-type" adhesive that requires fast gel formation. Slow reaction rate is not advantageous in paper making industry, either.

The resin composition recited in patent document 2 has improved waterproof, as compared with the resin composition recited in patent document 1, presumably for the following reason. Since the reaction rate of a diacetone group and a hydrazine compound is not significantly fast, as compared with the reaction rate of an acetoacetyle group and a hydrazine compound, uniformity in overall crosslinking density is improved, and a sufficiently crosslinked polymer network is formed.

The patent document 3 discloses that the combination of an acetoacetyl group-containing PVA-based resin and a specific amine compound does not give a sufficient waterproof to the crosslinked product when applied to the

heat-sensitive recording medium. And the resin combination cited in the patent document 4 does not show sufficient adhesion when applied to the adhesive between a polarizer and a protective film.

An object of the present invention is to provide a PVA-based resin composition having an excellent crosslinking reactivity, and being able to produce a crosslinked product having an excellent waterproof and high adhesion.

Means for Solving the Problems

As a result of extensive investigation, the present inventors found that the resin composition comprising an active hydrogen-group containing PVA-based resin (A), and a N-amino poly(acrylamide)-based resin having a (meth) acrylic acid structural unit represented by the general formula (1) and an acrylamide structural unit represented by the general formula (2) can accomplish the object of the invention. Hereinafter, the N-amino poly(acrylamide)-based resin is referred to as "N-APA-based resin".

[formula 1]

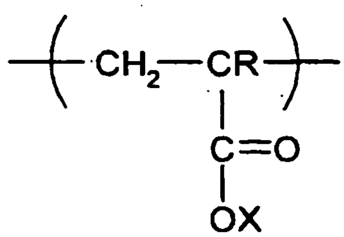

(1)

In the formula, R is a hydrogen or a methyl, X is a hydrogen or an alkali metal.

[formula 2]

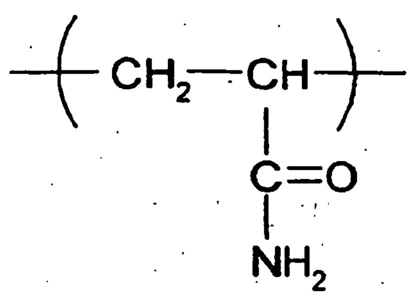

(2)

The most important point in the present invention is utilizing of the specific N-APA, instead of a conventional N-APA, as the crosslinking agent for an active hydrogen group containing PVA-based resin(A) to give an excellent waterproof to the reaction product. The specific N-APA has a (meth)acrylic acid structural unit represented by the general formula (1) and an acrylamide structural unit represented by the general formula (2).

It is supposed that (meth)acrylic acid structural unit in the specific N-APA enhanced the compatibility with PVA-based resin(A) to give a sufficiently crosslinked polymer network, which shows higher waterproof compared with that from the conventional N-APA and PVA-based resin(A).

Effect of the Invention

Since the resin composition of the present invention can provide a crosslinked product having an excellent waterproof, the resin composition is preferably used for an adhesive, a paper coating, an aqueous gel, a heat-sensitive recording medium, a polarizing film or the like. Furthermore, higher rate of crosslinking reaction will contribute to more efficient production.

Best Mode for Carrying out the Invention

Description written below is an embodiment (representative embodiment) of the present invention. Accordingly

the invention is not limited to the description.
Hereinbelow, the present invention will be described in more detail.

The PVA-based resin (A) has an acetoacetyl group as an active hydrogen-containing functional group. Particularly, an acetoacetyl group-containing PVA-based resin and an acrylamide structural unit-containing PVA-based resin are preferably used.

At first, a PVA-based resin having acetoacetyl group (hereinafter, it is referred to as "AA-PVA") will be described in detail. "PVA" is abbreviation of polyvinyl alcohol.
The AA-PVA (A) is obtained by introducing acetoacetyl group to polyvinyl alcohol resin. The AA-PVA (A) can be prepared by reacting PVA-based resin with diketene, or by the transesterification reaction of PVA-based resin with acetoacetic ester, or by the hydrolysis of a copolymer of vinyl acetate and vinyl acetoacetate, or the like method. Among these methods, the reaction of PVA-based resin with diketene is preferred, because the process is simple and the quality of the product is high. Hereinafter, the reacting method will be explained, but the preparation method of AA-PVA is not limited to the reacting method.

The PVA-based resin can be obtained from the hydrolysis of poly(vinyl ester). Examples of the vinyl ester monomers include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate and vinyl versatate, and the like. Among them, vinyl acetate is preferably used from the economic viewpoint.

The PVA-based resin can also be obtained from the hydrolysis of the copolymer of vinyl ester and other monomer copolymerizable with vinyl ester. Examples of the copolymerizable monomer include, for instance, an olefin such as ethylene, propylene, isobutylene, α-octene, α-dodecene, α-octadecene and so on; an unsaturated acid such as acrylic acid, methacrylic acid, crotonic acid, maleic acid, maleic anhydride, itaconic acid, or undecylenic acid and so on, a salt thereof, or mono- or dialkyl ester thereof; a nitrile compound such as acrylonitrile, methacrylonitrile and so on; an amide compound such as diacetone acrylamide, acrylamide, methacrylamide and so on; an olefin sulfonic acid such as ethylene sulfonic acid, allyl sulfonic acid, methallyl sulfonic acid and so on, or salt thereof; an alkyl vinyl ether; a vinyl compound such as dimethylallylvinyl ketone, N-vinylpyrrolidone, vinyl chloride, vinylethylene carbonate, 2,2-dialkyl-4-vinyl-1,3-dioxolane, glycerol monoallyl ether, 3,4-diacetoxy-1-butene and so on; a substituted vinyl acetate such as isopropenyl acetate, 1-methoxyvinyl acetate and so on, vinylidene chloride, 1,4-diacetoxy-2-butene, vinylene carbonate and so on.

Furthermore, examples of the copolymerizable monomer include a polyoxyalkylene group-containing monomer such as polyoxyethylene (meth)allyl ether, polyoxyethylene (meth)acrylamide, polyoxypropylene (meth)acrylamide, polyoxyethylene (meth)acrylate, polyoxypropylene (meth)acrylate, polyoxyethylene(1-(meth)acrylamide--1,1-dimethylpropyl)ester, polyoxyethylene vinyl ether, polyoxypropylene vinyl ether, polyoxyethylene allylamine, polyoxypropylene allylamine, polyoxyethylene vinylamine and polyoxypropylene vinylamine; a cationic group-containing monomer such as N-acrylamide metyltrimethylammonium chloride, N-acrylamide ethyltrimethylammonium chloride, N-acrylamide propyltrimethylammonium chloride, 2-acryloyloxyethyltrimethylammonium chloride, 2-methacryloyloxyethyltrimethylammonium chloride, 2-hydroxy-3-methacryloyloxypropyltrimethylammonium chloride, allyltrimethylammonium chloride, metallyltrimethylammonium chloride, 3-butenetrimethylammonium chloride, dimethyldiallylammonium chloride, diethyldiallylammonium chloride, or the like.

The content of such copolymerizable monomer in the PVA-based resin is chosen depending on kinds of monomer, but is usually not more than 10 mol%, particularly not more than 5 mol%. Too much content of the monomer is not preferable, because water solubility of PVA-based resin may be deteriorated and compatibility with crosslinking agent may be lowered. PVA-based resin which contains 1.6 to 3.5 mol% of 1,2-glycol bond in the main chain, which may be formed from the hydrolysis of poly(vinylacetate) polymerized at 100 °C or more, can also be used in the present invention.

In order to introduce the acetoacetyl group into the PVA-based resin, the following methods can be employed a method of reacting gaseous or liquid diketene with PVA-based resin directly; a method of spraying gaseous or liquid diketene in an atomosphere of an inert gas to react with a PVA-based resin that absorbed an organic acid in advance; a method of reacting by spraying a mixture of an organic acid and liquid diketene to PVA-based resin, or a like method.

The reaction device for conducting the above-mentioned reaction include, for example, a kneader, Henschel mixer, ribbon blender, various other blenders, or a device equipped with stirrer and heater.

The degree of polymerization (according to JIS K6726) of AA-PVA(A) is preferably from 300 to 4000, more preferably from 400 to 3500, especially from 500 to 3000. An unduly low degree of polymerization, which may result in insufficient waterproof and cause a slow crosslinking reaction, is not preferable. On the other hand, an unduly high degree of polymerization is not preferable, because the viscosity of the obtained aqueous solution can be so high that the various applicable processes including the application onto a substrate become difficult.

The degree of hydrolysis of AA-PVA(A) is preferably 80mol% or more, more preferably 85mol% or more, especially 90mol% or more. When the degree of hydrolysis is lower, solubility of the AA-PVA in water can be poor.

The degree of acetoacetyl modification in the AA-PVA(A) (which is hereinafter referred to as "AA degree") is

preferably from 0.1 to 20 mol%, more preferably from 0.2 to 15 mol%, particularly from 0.3 to 10 mol%. An unduly low AA degree is not preferable, because the rate of crosslinking reaction may be slow and the waterproof of the reaction product can be insufficient. On the other hand, an unduly high AA degree is not preferable, because the solubility of AA-PVA in water tends to decrease, or stability of the aqueous solution of AA-PVA tends to deteriorate.

Furthermore, the average sequence length of hydroxyl groups (hereinafter it is referred to as "$l_{OH}$") in the AA-PVA (A) to be used in the present invention is preferably not less than 10, more preferably not less than 15. An unduly small $l_{OH}$ is not preferable, because the waterproof of the obtained crosslinked product tends to be poor.

$l_{OH}$ is calculated as the following equation, based on the intensity ratio of methylene carbon obtained from $^{13}C$-NMR (solvent: $D_2O$) using 3-(trimethylsilyl) propionic-2,2,3,3-$d_4$-acid sodium salt, as an internal standard.

$l_{OH}$={2(OH,OH)+(OH,OR)}/(OH,OR)

where

(OH,OH) is the mol fraction of (OH,OH)dyad i.e. absorption having a peak top in the range from 43 to 46 ppm, and
(OH,OR) is the mol fraction of (OH,OR)dyad i.e. absorption having a peak top in the range from 41 to 43 ppm, and
(OR,OR) is the mol fraction of (OR,OR)dyad i.e. absorption having a peak top in the range from 38 to 41 ppm.

Details on the average sequence length of hydroxyl groups and a measurement method thereof are described in "Poval" (published by Kobunshi Kankokai, p248,1981), and Macromolecules, Vol. 10, p532(1977).

A method of controlling the average chain length of hydroxyl group in AA-PVA (A) to be used in the invention is not particularly limited. In order to obtain higher value of $l_{OH}$ of AA-PVA(A) in the present invention, polyvinyl acetate is hydrolyzed by alkali in the solvent of which the dielectric constant is preferably 32 or less, more preferably 6 to 28, especially 12 to 25 at 20 ˚C. Unduly high dielectric constant of the solvent can make the $l_{OH}$ smaller and make block degree of the acetyl groups remained in PVA-based resin smaller.

Examples of the solvent having a dielectric constant of 32 or less at 20˚C include methanol (31.2), methyl acetate/methanol=1/3 (27.1), methyl acetate/methanol=1/1 (21.0), methyl acetate/methanol=3/1(13.9), methyl acetate (7.03), isopropyl acetate (6.3), trichloroethylene (3.42), xylene (2.37), toluene (2.38), benzene (2.28), acetone (21.4), and so on. Among them, a mixture of ethyl acetate and methanol is preferably used.

To adjust the swelling degree and elution ratio of PVA-based resin used as a raw material, the method of thermally treating PVA while standing still or casting to adjust crystallinity can be employed, but from the viewpoint of adjusting the volatile content, the method of thermally treating while casting is preferable.

AA-PVA(A) in the present invention may contain byproduct formed in the manufacturing process as follows: an alkali metal acetate like sodium acetate, an organic acid like acetic acid, an organic solvent like methanol or methyl acetate. The alkali metal acetate may be produced by a side reaction of alkali metal hydroxide used as a hydrolysis catalyst with acetic acid generated by hydrolysis of polyvinyl acetate, or the like. The organic acid may be derived from organic acid absorbed in PVA when AA-PVA is produced by reacting diketene with PVA-based resin, or the like. The organic solvent may be derived from a reaction solvent for PVA-based resin, a cleaning solvent to be used in manufacturing AA-PVA resin, or the like.

Next, PVA-based resins having diacetone acrylamide structural unit (hereinafter, it is abbreviated as "DA-PVA") will be described in detail. A DA-PVA (A) to be used in the invention is prepared by introducing diacetone acrylamide structural unit to a PVA-based resin. The DA-PVA (A) may be preferably prepared by hydrolyszing a copolymer of vinyl ester and diacetone acrylamide.

Examples of the vinyl ester used for the copolymer are the same as vinyl ester monomer used for manufacturing AA-PVA (A), in particular, vinyl acetate is preferably used.

A method of copolymerization of vinyl ester and diacetone acrylamide is not particularly limited, and a known copolymerization method such as bulk polymerization, solution polymerization, suspension polymerization, dispersion polymerization, emulsion polymerization or the like is applicable. Usually, the solution polymerization is employed. Examples of the solvent to be used in the solution polymerization include lower alcohols such as methanol, ethanol, isopropanol, n-propanol, butanol and so on, and ketones such as acetone, methyl ethyl ketone and so on. Among them, methanol is preferably used in industrial scale.

The copolymerization is conducted in the presence of a radical initiator. Examples of the radical initiator include azobisisobutyronitrile, acetyl peroxide, benzoyl peroxide, lauroyl peroxide, low temperature initiator such as azobisdimethylvaleronitrile or azobismethoxydimethylvaleronitrile.

The copolymerization is conducted at the temperature selected from the range of 30˚C to the boiling point of the solvent used, preferably from 35 to 150 ˚C, more preferably from 40 to 75 ˚C, depending on the solvent and pressure of the copolymerization reaction.

The resultant copolymer is hydrolyzed in such a manner that the copolymer is dissolved in a solvent such as alcohol and then hydrolyzed in the presence of an alkali or an acid catalyst. Examples of the typical solvent include methanol, ethanol, propanol, tert-butanol and so on, and particularly, methanol is preferably used. Examples of the alkali catalyst are sodium hydroxide, potassium hydroxide, sodium methylate, sodium ethylate, potassium methylate, or lithium methylate or the like. Examples of the acid catalyst include sulfuric acid, hydrochloric acid, nitric acid, metasulfonic acid,

zeolite, cation-exchange resin or the like.

A DA-PVA (A) may contain other copolymerizable monomers as far as the copolymerizable monomer does not spoil the effects of the invention. Examples of the copolymerable monomer include copolymerizable monomers usable for manufacturing PVA-based resin as a raw material of AA-PVA.

The degree of polymerization (according to JIS K6726) of DA-PVA(A) is preferably from 300 to 4000, more preferably from 400 to 3500, especially from 500 to 3000. An unduly low degree of polymerization, which may result in insufficient waterproof, is not preferable. On the other hand, an unduly high degree of polymerization is not preferable, because the viscosity of the obtained aqueous solution can be so high that the various applicable processes including the application onto a substrate become difficult.

A degree of hydrolysis of the DA-PVA (A) is preferably 80 mol% or more, more preferably 85 mol% or more, especially 90 mol% or more.

An unduly low degree of hydrolysis may decrease water solubility, which is unfavorable.

The degree of modification of diacetone acrylamide structural unit in the DA-PVA (A) is preferably from 0.1 to 20 mol%, more preferably from 0.2 to 15 mol%, especially from 0.3 to 10 mol%. An unduly low degree of modification of diacetone acrylamide structural unit is not preferable, because the rate of crosslinking reaction may be slow and the waterproof of the reaction product can be insufficient. On the other hand, an unduly high degree of modification of diacetone acrylamide structural unit is not also preferable, because the solubility of DA-PVA(A) in water tends to decrease, or stability of the aqueous solution of DA-PVA(A) may deteriorate.

According to the invention, a mixture of an AA-PVA (A) and a DA-PVA (A), a mixture of two or more kinds of AA-PVAs (A) or DA-PVAs (A) each having different polymerization degree, hydrolysis degree, or degree of AA-modification from the other may be used as an active hydrogen-containing PVA-based resin (A). An another PVA-based resin which does not belong to the PVA-based resin (A) used in this invention, for instance, a conventional PVA or a modified PVA-based resin containing various unsaturated comonomer unit mentioned above, may be used with the PVA-based resin (A) as far as the feature of the resin composition of the present invention is not be impaired. 50 % or less, preferably 30 % or less of another PVA-based resin which does not belong to the PVA-based resin (A) may be used with the active hydrogen-containing PVA-based resin (A) in this invention.

Next, N-APA-based resin (B) used in the invention will be described.

The N-APA-based resin (B) has concurrently all of (meth)acrylic acid derivative structural units represented by the general formula (1), and acrylamide structural units represented by the general formula (2), and N-aminoacrylamide structural units represented by the general formula (3). In other word, N-APA-based resin (B) is partially N-aminated poly(acrylamide)-based resin. In particular, the present invention has a feature of use N-APA-based resin (B) having an (meth)acrylic acid derivative structural unit represented by the general formula (1).

[formula 1]

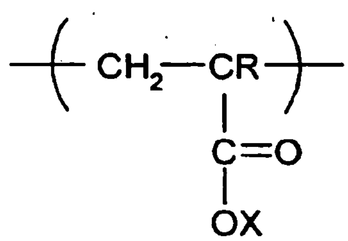

(1)

In the formula (1), R is a hydrogen or a methyl group, and X is a hydrogen or an alkali metal.

[formula 2]

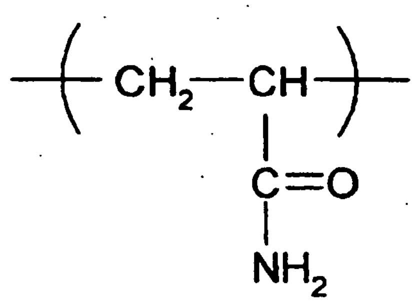

(2)

[formula 3]

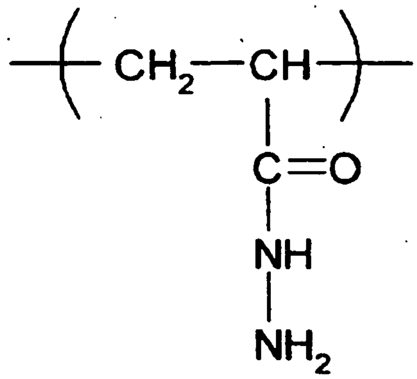

(3)

Carboxylic acid contained in the (meth)acrylic acid derivative structural units represented by the formula (1) usually exist as the form of free acid. Some or all of the carboxylic acids may exist as the form of the alkali metal salt form thereof. Examples of the alkali metal salt are the salts of lithium, sodium, potassium and so on. Among them, potassium carboxylate is preferable. Some of the carboxylic acids may be esterificated. The degree of esterification is usually 50 mol% or less, because an unduly high degree of esterification of the carboxylic acid may cause to decrease water solubility of the N-APA-based resin (B) or the compatibility of it with PVA-based resin (A).

The content of the (meth)acrylic acid derivative structural unit represented by the formula (1) in the N-APA-based resin (B) is preferably from 1 to 60 mol%, more preferably from 3 to 55 mol%, especially from 5 to 48 mol%. An unduly high content of the (meth)acrylic acid derivative unit is not preferable because the hydrophilicity of N-APA-based resin (B) may be exceedingly increased, which may give poor waterproof to the crosslinked product obtained by the reaction of the N-APA-based resin (B) with an active hydrogen -containing PVA-based resin (A). On the other hand, an unduly low content of the (meth)acrylic acid derivative unit is also not preferable because such N-APA-based resin (B) may show poor compatibility with an active hydrogen-containing PVA-based resin (A) or poor hydrophilicity.

The content of acrylamide structural unit represented by the formula (2) in the N-APA-based resin (B) is preferably from 5 to 50 mol%, more preferably from 10 to 45 mol%, especially from 15 to 40 mol%. The content of N-aminoacrylamide structural unit, which is remained unit of the N-APA-based resin (B), is preferably from 10 to 95 mol%, more preferably from 30 to 90 mol%, especially from 40 to 90 mol%. An unduly high content of N-aminoacrylamide structural unit is not preferable because such N-APA-based resin (B) tends to show poor waterproof. An unduly low content of N-aminoacrylamide structural unit is also not preferable because such N-APA-based resin (B) tends to have poor crosslinking reactivity with active hydrogen-containing PVA-based resin (A).

N-APA-based resin (B) may have other structural units than the structural units represented by the above general formulas (1) through (3), as far as the content of the other structural units does not impair the properties of the N-APA-based resin (B). The content is usually 20 mol% or less, more preferably 10 mol% or less.

A number-average molecular weight of N-APA-based resin (B) to be used in the invention is preferably in the range of 10000 to 200000, more preferably of 10000 to 150000, especially of 10000 to 100000. An unduly low number-average molecular weight is unfavorable, because it may cause the waterproof of the product to be insufficient or lower the rate of crosslinking reaction. An unduly high number-average molecular weight is also unfavorable, because the viscosity of aqueous solution of such N-APA-based resin (B) may be exceedingly increased, which may make it difficult to apply the aqueous solution on a substrate or use in various applicable processes.

The number-average molecular weight is measured by GPC (gel permeation chromatograph) analysis and converted to poly(ethylene oxide) basis.

A method of producing N-APA-based resin (B) used in the present invention is not particularly limited. For instance, a method of reacting a copolymer of acrylamide and (meth)acrylate or salt of (meth)acrylic acid with hydrazine, and converting the stuructural units of acrylamide and (meth)acrylic acid to N-aminoacrylamide structural unit may be employed. More concretely, N-APA-based resin (B) may be obtained by firstly adding an aqueous solution of alkali metal hydroxide such as sodium hydroxide, potassium hydroxide to an aqueous solution of a copolymer of acrylamide and (meth)acrylate, to convert these groups into the carboxylic acid alkali-salt form, then adding hydrazine aqueous solution to the mixture, followed by heating.

The amount of N-APA-based resin (B) contained in the present resin composition is not particularly limited, and it is usually lower than the amount of the PVA-based resin (A) having an active hydrogen-containing functional group. Specifically, N-APA-based resin (B) is contained in an amount of preferable range of 1 to 100 parts, more

preferable range of 5 to 50 parts, in particular, range from 5 to 30 parts by weight, relative to 100 parts of PVA-based resin (A). Resin compositions containing an unduly low or high amount of the N-APA-based resin (B) are not preferable, because such resin composition may require a long time for producing a crosslinked product having waterproof or may not impart sufficient waterproof to the crosslinked product thereof.

An molar ratio of an amount (a) of the active hydrogen-containing functional group in PVA-based resin (A) to an amount (b) of the hydrazine group in N-APA-based resin (B), i.e. a/b, is in the range of preferably 0.03 to 20, more preferably 0.05 to 10, especially 0.1 to 10. When the ratio is unduly low or high, the prepared resin composition may require a long time for crosslinking reaction or may not impart sufficient waterproof to its crosslinked product, thus being unfavorable as in the aforementioned cases.

Furthermore, other resin, for instance, polysaccharide such as starch, cellulose and so on; or water-soluble resin such as polyetyleneglycol, polyvinylpyrrolidone, polyoxazoline, water-soluble polyamide, water-soluble polyester, polyacrylamide, polyethylenimine and so on may be contained in the resin composition of the present invention in an amount of the range by which the basic physical characters of the resin composition is not impaired. The amount is usually not more than 30 % by weight, more preferably not more 20% by weight.

Also, additives such as coloring agent, dye, pigment, fluorescent whitening agent, pigment, UV absorber, antioxidant, filler, plasticizer, antistatic agent, heat stabilizer, surfactant, dryer, deodorizer, antibiotic agent, and crosslinking agent other than hydrazine compound may be contained in the composition.

The inventive resin composition containing the PVA-based resin (A) having an active hydrogen-containing functional group, and the N-APA-based resin (B) having a structural unit represented by the general formulas (1) through (3) is normally used as an aqueous solution in various applications. The aqueous solution may be prepared by a method (i) of putting a mixture of the PVA-based resin (A) and the N-APA-based resin (B) into water to dissolve; a method (ii) of mixing the aqueous solution of the PVA-based resin (A) and the aqueous solution of the N-APA-based resin (B); a method (iii) of adding the N-APA resin (B) to the aqueous solution of the PVA-based resin (A) to dissolve; or a like method. Among them, the method (ii) is preferable due to the high reactivity of the PVA-based resin(A) and the N-APA resin(B) which sometimes causes unstability of those mixture, the resin composition of the present invention. Because of short pot life, the resin composition should be used immediately after preparation of its aqueous solution.

The concentration of the PVA-based resin (A) in the present aqueous resin composition is preferably from 0.05 to 40% by weight, more preferably from 1 to 30% by weight, and particularly preferably from 1 to 20% by weight. An unduly high concentration of the PVA-based resin (A) is not preferable, because the viscosity may be exceedingly increased, which may cause the handling to it to be difficult. An unduly low concentration of the PVA-based resin (A) is also not preferable, because the waterproof of the product may be poor, or longer time may be required for drying of the composition after the application of it on a substrate.

The concentration of the N-APA-based resin (B) in the present aqueous resin composition is preferably from 0.05 to 40% by weight, more preferably from 1 to 30% by weight, and particularly preferably from 1 to 20% by weight. An unduly high concentration of the N-APA-based resin (B) aqueous solution is not preferable, because the crosslinking reaction may progress so fast that the morphology of the resulting crosslinked product may be inequable to give an insufficient waterproof. An unduly low concentration of the N-APA-based resin (B) aqueous solution is also not preferable, because a long time may be required for drying, as in the case of the PVA-based resin (A) aqueous solution.

Unlike the PVA-based resin compositions mentioned in the prior art; the resin composition in the present invention shows an excellent proof in a wide range of pH from acidic to alkaline. The pH is usually selected in the range from pH 3 to 10, preferably from pH 4 to 9, to obtain the best performance in each application, considering a purpose of use, or a correlation with other additive. In the range of pH =3 to 5, the crosslinking reaction of the PVA-based resin (A) and the N-APA-based resin (B) is fast. The resin composition comprised of them, therefore, is properly applied for so-called "honeymoon type" adhesive which requires a rapid gellation. On the other hand, in the range of pH=6 to 10, the crosslinking reaction of the PVA-based resin (A) and the N-APA-based resin (B) is slow. The resin composition comprised of them, therefore, is properly used to the application where the stability of the mixture is required.

The above mentioned aqueous resin composition may contain an additive such as a defoamer, an anti-mold agent, an antiseptic agent, or a leveling agent, as far as the additive does not spoil the feature of the resin composition in the present invention. The additive may be contained in either one or both of the PVA-based resin (A) aqueous solution, and the N-APA-based resin (B) aqueous solution.

The aqueous solution of the resin composition in the present invention prepared by the above method can be applied to a substrate by a well-known method such as coating, cast molding, or immersion. After that, it is dried by heat or under an ambient temperature or at a low temperature, depending on the application. Thus obtained crosslinked product can exhibit an excellent waterproof, which is an object of the invention.

The drying condition is not specifically limited, but may be properly selected depending on the manner of application. Normally, drying is performed under a temperature condition from 5 to 150 ˚C, preferably from 30 to 150 ˚C, and particularly preferably from 50 to 150 ˚C, and for a drying time from 0.1 to 60 minutes, preferably from 0.1 to 30 minutes, and particularly preferably from 0.2 to 20 minutes.

Other methods to produce the crosslinked product in the present invention include, for instance, spray or coat of the aqueous solution of the N-APA-based resin (B) onto the mold comprised of the PVA-based resin (A), or immersing of the mold comprised of the PVA-based resin (A) into the aqueous solution of the N-APA-based resin (B), followed by drying.

The resin composition in the present invention can be properly used for the various applications those require good waterproof. Such applications include adhesives, binders, coatings, or the like.

In the following, polarizing film and heat-sensitive recording medium, which are the representative applications of the resin composition in the present invention, are described.

First, a polarizing film containing a reaction product of the inventive resin composition will be described.

The polarizing film of the present invention is manufactured by laminating a polarizer between two transparent protective films through the adhesive layer which contains the reaction product in the present invention.

A polarizer used for the polarizing film is not particularly limited, and any known polarizer may be used. Examples of the polarizer include a film which is formed by adsorbing dichromatic material such as iodine or dichromatic die to hydrophilic polymer film such as PVA-based film, partially formalized PVA-based film, and ethylenvinyl alcohol-based resin film, and uniaxially stretched; dehydration treated PVA film; dehydrochloric acid treated polyvinyl chloride film; polyene-based oriented film and so on. Among them, a polarizer made from PVA-based resin and dichromatic material such as iodine is preferable.

Such polarizer can be formed by immersing PVA-based film in a solution of iodine, dyeing and then, if necessary, stretching in the solution of boron compound such as boric acid, borac or the like at a magnification of 2 to 10 times in a uniaxial direction.

A thickness of the polarizer is usually from 30 to 100 $\mu$m, but it is not particularly limited thereto.

Non-limiting examples of a material used as the transparent protective film include, for instance, polyester-based resin such as polyethylene terephthalate and polyethylene naphthalate or the like; cellulose-based resin such as cellulose diacetate and cellulose triacetate, or the like; polyacrylate-based resin such as polymethyl methacrylate; polystyrene-based resin such as polystyrene or acrylonitrile-styrene copolymer or the like; polyolefin-based resin such as polypropylene, or the like; norbornene-based resin; single cyclo-type polyolefin resin; alicyclic structure-containing resin such as cyclic conjugated diene polymer, vinyl alicyclic hydrocarbon polymer, and hydride thereof. Among them, cellulose triacetate or norbornene based resin is preferably used from the viewpoint of heat resistance and mechanical strength.

The protective film has a thickness ranging usually from 10 to 100 $\mu$m, preferably 20 to 80 $\mu$m.

A polarizing film of the invention is manufactured by laminating a transparent protective film on at least one surface of the polarizer manufactured film through an adhesive layer. Usually, the polarizing film is manufactured by applying the aqueous solution of the resin composition between a polarizer and a protective film, and laminating them, followed by heating for dry.

The method of application of the aqueous solution of the resin composition before the lamination of a polarizer and protective films also include, for instance, roll coating, air doctor coating, blade coating spraying, immersing and the like. A concentration of the resin composition in the aqueous solution is adjusted in the range of usually 0.1 to 20 % by weight, especially 0.5 to 10 % by weight. An unduly low concentration of the resin composition in the aqueous solution is not preferable, because such aqueous solution may require a long time for drying, which lowers productivity. An unduly high concentration of the resin composition in the aqueous solution is also not preferable, because it may make difficult to apply the solution evenly. The aqueous solution of the resin composition is preferably applied in such amount that the thickness of the resulting dried adhesive layer falls in the range of usually from 1 to 1000 nm, more preferably from 1 to 500 nm, further more preferably from 1 to 300 nm. An unduly thick adhesive layer is not preferable, because it makes difficult to obtain the polarizing film that has even thickness.

Next, the application of the resin composition in the present invention for the heat-sensitive recording medium will be described.

The heat-sensitive recording medium in the present invention contains at least one layer which is comprised of the resin composition in the present invention on a substrate. Examples of the layer include a protective layer and heat-sensitive recording layer.

Non-limiting examples of the substrate to be used for the heat sensitive recording medium include paper (such as board paper including manila board, white board and liner, printing paper including woodfree paper, wood containing paper and gravure paper, higher-quality paper, medium-quality paper, lower-quality paper, news print paper, release paper, carbon paper, noncarbon paper and glassine paper, synthetic paper etc.), non-woven fabric, and plastic film (such as polyester film, nylon film, polyolefin film, polyvinyl chloride film or laminate thereof), and complicated sheet such as synthetic resin laminated paper.

Hereinafter, each layer in the heat-sensitive recording medium will be described in detail.

The heat-sensitive recording layer is manufactured by applying the aqueous coating composition containing leuco dye, color developer and binder comprised of the resin composition in the present invention, onto a substrate. The coating composition is prepared in such manner that the resin composition in the present invention will be 10 to 200 % by weight based on the total amount of the leuco dye and the color developer.

Any known leuco dye may be used. Examples of the leuco dye include triphenylmethane based compound such as 3,3-bis(p-dimethylaminophenyl)-phthalide, 3,3-bis(p-dimethylaminophenyl)-6-dimethylaminophthalide (crystal violet lactone), 3,3-bis(p-dimethylaminophenyl)-phthalide, 3-(p-dimethylaminophenyl)-3-(1,2-dimethylindol-3-yl) phtalide; diphenylmethane based compound such as 4,4'-bis(dimethylaminophenyl)benzhydryl benzyl ether, N-chlorophenylleuco auramine; xanthene-based compound such as Rhodamine B anilinolactam, Rhodamine B-p-chloroanilinolactam, 3-diethylamino-7-dibenzylaminofluoran; thiazine-based compound such as benzoyl leuco Methylene Blue, p-nitrobenzoyl leuco Methylene Blue; spiro-based compound such as 3-methylspironaphthopyran, 3-ethylspirodinaphthopyran or the like, but the leuco dye is not limited to those examples. These leuco dyes may be used alone or in combination of two or more, depending on the application

A color developer is a compound which can develop by reacting with the coloring substance when heated. Examples of the color developer include phenol, p-methylphenol, p-tert-butylphenol, p-phenylphenol, α-naphthol, β-naphthol, 4,4'-isopropylidenediphenol (bisphenol A), 4,4'-sec-butylidenediphenol, 4,4'-cyclohexylidenediphenol, 4,4'-isopropylidenebis(2-tert-butylphenol), 4,4'-(1-methyl-n-hexylidene)diphenol, 4,4'-isopropylidenedicatechol, 4,4'-benzylidenediphenol, 4,4-isopropylidenebis(2-chlorophenol), phenyl-4-hydroxybenzoate, salicylic acid, 3-phenylsalicylic acid, 5-methylsalicylic acid, 3,5-di-tert-butylsalicylic acid, 1-oxy-2-naphthoic acid, m-oxybenzoic acid, 4-oxyphthalic acid and gallic acid, but are not limited thereto.

The heat-sensitive recording layer may contain, when necessary, various additives. Examples of such additives include inorganic pigment such as-calcium carbonate, silica, kaolin, aluminium hydroxide, aluminium oxide, zinc oxide, titanium oxide, clay, talc, barium sulfate; organic resin powder such as urea-formalin resin, nylon resin, acrylic resin, styrene-methacrylic acid copolymer, and the like; metal salt of higher fatty acid such as zinc stearate, calcium stearate; lubricant such as paraffin, polyethylene wax; benzophenon- or benzotriazole- ultraviolet absorber; anioic or nonionic surfactant; fluorescent dye and so on, according to needs.

In order to obtain well-dispersed coating composition, the leuco dye and color developer are respectively pulverized in water by employing a known pulverizing apparatus such as ball mill, atliter, sand grinder until the diameter of them become approximately 1 to 3μm. The aqueous dispersion of leuco-dye, and that of color developer, and the aqueous solution of the resin composition in the present invention, are then mixed to give the coating composition for the heat-sensitive recording layer. Furthermore, when required, various above-mentioned additives can be added to the coating composition. For easy handling of the coating composition, the solid content of it will be properly adjusted in the range from 10 to 40 % by weight.

Application of the coating composition to the substrate may be conducted by any of known coating method such as roll coating method, air doctor method, blade coating method, bar coating method, size press method and gate roll method. The amount of the coating composition applied on the substrate is preferably in the range of 0.1 to 20 g/m$^2$, more preferably 0.5 to 15 g/m$^2$, particularly 1 to 10 g/m$^2$ on a dry weight basis.

Next, the protective layer comprised in the heat-sensitive recording medium in the present invention will be described.

When the coating composition for the protective layer is prepared, water is usually employed as a dispertion medium, and the resin composition in the present invention and the pigments and other additives, if necessary, are mixed. Then, the resulting coating composition will be applied on the aforementioned heat-sensitive recording layer, followed by drying. The protective layer is effective for improvement of its waterproof, its solventproof, and its recording runnability.

Examples of the inorganic pigment include, for instance, calcium carbonate, silica, zinc oxide, aluminium oxide, aluminium hydroxide, titanium dioxide, talc, kaolin, or clay. In addition, organic pigments such as nylon resin fillers, urea/formalin resin fillers, or starch particles may be used. In particular, in the case where high gloss is necessary to the protective layer, inorganic fine particles such as colloidal silica, fumed-silica, or alumina sol are preferably used. The average particle diameter of the inorganic fine particles is preferably from 3 to 200 nm, more preferably from 3 to 100 nm, and particularly preferably from 10 to 50 nm. When the particle size is unduly small, the absorbtion of stamp ink or printing ink may be impaired. On the other hand, when the particle size is unduly large, the surface of the protective layer may be rough, and lose its gloss.

Application of the coating composition for the protective layer to the substrate may be conducted by any of known coating method such as roll coating method, air doctor method, blade coating method, bar coating method, size press method and gate roll method. The amount of the coating composition applied on the substrate is preferably in the range of 0.5 to 10g/m$^2$ on a dry weight basis. Thus formed protective layer will be dried upon a moderate heat or under an ambient temperature. The protective layer can be formed by successive coating of the aqueous solution containing the PVA-based resin (A) having an active hydrogen-containing functional group and that containing N-APA-based resin (B). When needed, the pigments and/or additives can be preferably added into the aqueous solution of the PVA-based resin (A). Thus formed protective layer contains the resin composition of the present invention. In such case, the amount of the solid content of the coating composition applied on the substrate will be adequately controlled.

It is possible to prepare the composition containing PVA-based resin (A) and that containing N-APA-based resin (B) independently, then apply the latter composition on the substrate layer to form the heat-sensitive recording

layer, followed by applying the former composition on it, to form the protective layer.
Super-calendering is properly employed to obtain a smooth surface and improve the gloss of the media.

Because of its excellent waterproof, the resin composition in the present invention can, therefore, be used to various applications as follows:

(1) Coating for manufacturing paper

Pigment binder for sublimation-type heat-sensitive recording medium, binder for inorganic fine pigment for coated paper, binder for the ink receiving layer of ink jet paper include microporous-type IJ paper, swellable-type IJ paper and the like, clear coating agent for paper, pigment binder for coated paper, pigment binder for electrophotographic recording medium, surface coating agent for release paper, pigment binder for coating layer of release paper, etc.

(2) Adhesives

Two-part adhesive, honeymoon type adhesive, tackifyer, re-moisturizer, binder for non-woven fabric, binder for building product (plasterboard, fiberboard, and the like), binder for various powder granulation, pressure-sensitive adhesive, fixing agent for anionic paint, etc.

(3) Aqueous gel

Substrate for discharged water treatment, water retention agent, cooling agent, bioreactor, fragrance, foundation reinforcer, etc.

(4) Coating agent

Fiber processing agent, leather finisher, paint, antifog coating, rustproof agent, finisher for galvanized plate, antistatic agent, conducting agent, temporary coat, temporary protective layer, etc.

(5) Film, membrane

Electrolytic membrane, packaging film, etc.

EXAMPLE

The present invention will be further described with reference to the following examples. In the examples, "part" and "%" denote "part by weight" and "% by weight", respectively, unless otherwise specified.

[PVA-based resin (A)]

The following 4 kinds of PVA-based resins, i.e. A1, A2, A3 and A4 were used. Table 1 shows the degree of polymerization, degree of hydrolysis, degree of modification (AA degree), and the average sequence length of hydroxyl group ($l_{OH}$) of the AA- PVA (A1, A2, A3) in the present invention. The resin A4 is a DA-PVA, which is modified with diacetone acrylamide structural unit, of which the degree of polymerization is 500, and degree of hydrolysis is 98.7 mol%, and degree of DA-modification is 4.0 mol%.

Table 1

| AA-PVA (A) | Degree of polymerization | Degree of Hydrolysis (mol%) | Degree of modification (mol%) | Average sequence length of OH |
|---|---|---|---|---|
| A1 | 1200 | 99.1 | 5.0 | 22 |
| A2 | 500 | 99.1 | 5.0 | 10 |
| A3 | 2300 | 98.0 | 4.0 | 18 |

[Crosslinking agent]

Five kinds of N-amino poly(acrylamide) based resins (N-APA), i.e. B1 through B5, were used. The number average molecular weight, the contents of N-aminoacrylamide structural unit, acrylamide structural unit and acrylic acid structural unit of the N-APA-based resins are shown in Table 2.

Adipoyl dihydrazide (ADH) was used in Comparable examples.

Table 2

| N-APA (B) | Structural unit | | | Number average molecular weight |
|---|---|---|---|---|
| | N-acrylamide (sic, correctly N-aminoacrylamide) | Acrylamide | Acrylic acid | |
| B1 | 75 | 18 | 7 | 20000 |
| B2 | 47 | 7 | 46 | 20000 |
| B3 | 79 | 8 | 13 | 90000 |
| B4 | 72 | 19 | 9 | 60000 |
| B5 | 30 | 20 | 50 | 10000 |

[Example 1]

An aqueous solution of AA-PVA (A1; Conc.=10%) and an aqueous solution of N-APA (B1; Conc.= 5%) were mixed in such manner that the N-APA (B1) is contained in an amount of 20 parts per 100 parts of the AA-PVA (A1), and the mixture was stirred to prepare an aqueous solution of the resin composition. The prepared aqueous solution was cast on PET film and was left for 48 hours under the conditions of 23˚C and 50 % RH, followed by drying at 70˚C for 5 minutes to form a film of the resin composition.
The film was immersed in a hot water at 80˚C for 1 hour. An elution ratio (%) of the film was calculated according to the following equation.

$$\text{Elution ratio (\%)} = \{(X_1 - X_2)/X_1\} \times 100$$

Where
$X_1$ (g) ; dry weight of the film before the immersion
$X_2$ (g) ; dry weight of the film after the immersion

The results are shown in Table 3.

[Examples 2 to 10 and Comparative Examples 1 and 2]

Crosslinked films were made from resin compositions and evaluated in the same manner as Example 1 except that the kinds of PVA-based resins (A) and/or crosslinking agent, and their amounts were changed as indicated in Table 3. The results are shown in Table 3.
Table 3

| | PVA-based Resin | Crosslinking agent | PVA/crosslinking Agent | | Elution ratio (%) |
|---|---|---|---|---|---|
| | | | (weight ratio) | (functional group molar ratio) | |
| Example 1 | A1 | B1 | 100/5 | 2.2 | 9 |
| Example2 | A1 | B1 | 100/10 | 1.1 | 7 |

(continued)

| | PVA-based Resin | Crosslinking agent | PVA/crosslinking Agent | | Elution ratio (%) |
|---|---|---|---|---|---|
| | | | (weight ratio) | (functional group molar ratio) | |
| Example3 | A1 | B1 | 100/20 | 0.6 | 7 |
| Example4 | A2 | B1 | 100/5 | 2.2 | 20 |
| Example 5 | A3 | B1 | 100/5 | 1.8 | 6 |
| Example6 | A1 | B2 | 100/5 | 3.4 | 11 |
| Example 7 | A1 | B3 | 100/5 | 2.1 | 10 |
| Example8 | A1 | B4 | 100/5 | 2.3 | 10 |
| Example9 | A1 | B5 | 100/5 | 5.0 | 27 |
| Example10 | A4 | B1 | 100/5 | -- | 22 |
| Comparative Example 1 | A1 | ADH | 100/5 | 1.7 | 100 |
| Comparative Example 2 | A4 | ADH | 100/5 | -- | 14 |

As shown in Table 3, all of the films comprised of N-APA as a crosslinking agent showed excellent waterproof (Examples 1-10). On the other hand, when ADH is used as crosslinking agent, the film of Comparative Example 2 employing DA-PVA showed good waterproof, while the film of Comparative Example 1 employing AA-PVA did not show good waterproof.

[Example 11]

An aqueous solution of AA-PVA (A2; Conc.=18%, Temp.= 25˚C) and aqueous solution of N-APA (B2; Conc. =20%, Temp.=25 ˚C) were mixed in such manner that the content of N-APA (B1) is 5 parts by weight per 100 parts of AA-PVA (A4), and stirred. The time required for the mixture to lose fluidity, i.e. gel time, was measured. The results are shown in Table 4.

[Examples 12 to 17, and Comparative Examples 3 and 4]

Aqueous solutions of resin compositions were prepared and measured in the same manner as Example 11 except that the kinds of PVA-based resins or crosslinking agent, and concentrations of PVA-based resins were changed as indicated in Table 4. The results are shown in Table 4

Table 4

| | PVA-based resin | | Crosslinking agent | Gel time |
|---|---|---|---|---|
| | Kind | Concentration of aqueous solution (%) | | |
| Example11 | A2 | 18 | B1 | 2 min 15 sec |
| Example12 | A2 | 12 | B1 | 4 min 30 sec |
| Example13 | A2 | 18 | B2 | 5 min 00 sec |
| Example14 | A2 | 18 | B3 | 1 min 45 sec |
| Example15 | A2 | 18 | B4 | 2 min 45 sec |
| Example16 | A2 | 18 | B5 | 25min |
| Example17 | A4 | 18 | B1 | 1 hour 30min |
| Comparative Example 3 | A2 | 18 | ADH | 5 min |

(continued)

| | PVA-based resin | | Crosslinking agent | Gel time |
|---|---|---|---|---|
| | Kind | Concentration of aqueous solution (%) | | |
| Comparative Example 4 | A4 | 18 | ADH | ※ |
| ※ Gelation did not occur even 2 hours after mixing | | | | |

As shown in Table 4, the aqueous solutions of Examples 11 to 16 and Comparative Example 3, where the AA-PVA(A2) was employed, showed short gel time, although the gel times were different individually depending on the kind of crosslinking agent. On the other hand, gel time of the aqueous solution of the resin composition employing DA-PVA is slower than other examples. However, Exapmle 17 employing N-APA as crosslinking agent showed a shorter gel time than Comparative Example 4 employing ADH as crosslinking agent, which did not gel even 2 hours after the mixing.

[Example 18]

A PVA film of 70 μm in thickness was obtained by casting of an aqueous solution (Conc.=10%) of PVA, of which the degree of polymerization is 1700 and the degree of hydrolysis is 99.5mol%, on a metal plate, following by drying upon heat. The PVA film was attached on a biaxial stretcher, and was extended uniaxially in vertical direction by four times at 130˚C, then the tensioned film was immersed in water (20˚C) for 5 minutes. After that, the tensioned film was immersed in the aqueous solution of iodine (0.2g/L) and potassium iodide (30g/L) at 20˚C for 5 minutes, then was immersed in the aqueous solution (55 ˚C) of boric acid (60g/L) and potassium iodide (40g/L) for 5 minutes, followed by washing with a purified water at 10˚C for 15 seconds and drying at 80 ˚C for 2 minutes to give a polarizer (thickness: 30 μm). An aqueous solution of AA-PVA resin (A1; Conc.=10%) used in Example 1, and an aqueous solution of N-APA (B1; Conc.=5%) were mixed and stirred so that the mixture contains 20 parts by weight of N-APA (B1) relative to 100 parts by weight of AA-PVA resin (A1). Then, the mixture was diluted with water to give an aqueous solution of adhesive (Conc. =3%).
Two sheets of triacetyl cellulose (thickness: 100 μm) were used as protective films. One surface of each protective film was coated with the aqueous solution of adhesive with a bar coater (No. 8). Then, the protective films were immediately adhered to the polarizer in such a manner that the polarizer was sandwiched between the protective films. Then, the polarizer with the protective films was laminated under a pressure (2 kg/$m^2$) by using a laminator, followed by keeping for three days under an environment of 23 ˚C and 65 % RH to give an polarizing film in the present invention.
The force of adhesion of the interface between the protective films and the polarizer was measured by a load cell (180˚ peel, sample width=25 mm, load cell speed=300 mm/min). Since the adhesive force was so strong that the protective film was ruptured during the measurement.

[Example 19]

A polarizing film was obtained in the same manner as in Example 18 except that a norbornene resin film (ARTON by JSR) (thickness: 100 μm) was used as a protective film. The force of adhesion of the interface between the protective film and the polarizer was measured in the same manner as in Example 18. Since the adhesive force was so strong that the protective film was ruptured during the measurement.

[Comparative Example 5]

A polarizing film was obtained in the similar manner as in Example 18 except that N-APA (B1) was not used in adhesive. A peeling test was conducted in the same manner as in Example 18. The force of adhesion of the interface between the protective film and the polarizer was measured in the same manner as in Example 18. Measurement was performed without rupture of the sample. The peeling strength was 500 mN/mm.

[Comparative Example 6]

A polarizing film was obtained in the same manner as in Example 19 except that N-APA (B1) was not used in adhesive. The force of adhesion of the interface between the protective film and the polarizer was measured in the same manner as in Example 19. Measurement was performed without rupture of the sample. The peeling strength was 200 mN/mm.

[Example 20]

An aqueous solution of AA-PVA resin (A1; Conc.= 10%), an aqueous solution of N-APA (B1; Conc.= 5%), and kaolin clay were mixed so that the ratio of AA-PVA resin (A1), N-APA resin (B1), and kaolin clay was 100:5:50 (parts by weight). After that, the mixture was diluted with water to give the coating composition for the protective layer of which the solid concentration of the total of AA-PVA and N-APA is 4%.
The coating solution was coated on a commercially available heat-sensitive facsimile paper (without overcoat) with an applicator having a clearance of 50 μm. Thereafter, the heat-sensitive paper was dried in a hot-air dryer at 40˚C for 30 minutes. Thus, the heat-sensitive paper coated with a protective layer was prepared.
One drop of water was dropped on the surface of the protective layer of the heat-sensitive recording paper. The surface on which the water was dropped was gently rubbed with a fingertip ten times, and a state of the area was observed. Waterproof of the heat-sensitive recording paper was evaluated in accordance with the following criteria and summarized in Table 5.

◎: The surface was not peeled off at all after 10 times of rubbing.
○: The surface was not peeled off after 5 times of rubbings, but was slightly peeled off after 10 times.
Δ: The surface was slightly peeled off after 5 times of rubbing.

[Examples 21 to 23, and Comparative Examples 7 and 8]

A heat-sensitive paper having a protective layer was obtained and evaluated in the same manner as Example 20 except that PVA-based resin and crosslinking agent were changed as shown in Table 5. The results are shown in Table 5.

Table 5

| | PVA-based resin | Crosslinking agent | Waterproof |
|---|---|---|---|
| Example20 | A1 | B1 | ◎ |
| Example21 | A2 | B1 | ◎ |
| Example22 | A3 | B1 | ◎ |
| Example23 | A4 | B1 | ○ |
| Comparative example 7 | A1 | ADH | Δ |
| Comparative example 8 | A4 | ADH | Δ |

In either case of using AA-PVA or DA-PVA, the obtained heat-sensitive recording papers having a protective layer exhibit excellent waterproof, comparing with the cases of using ADH as a crosslinking agent.

Industrial Applicability

Since the resin composition of the present invention can provide a crosslinked product showing excellent waterproof and good adhesion, the resin composition is suitable for application including an adhesive for polarizing film, heat-sensitive recording medium, paper processing agent, aqueous gel and the like. Furthermore, due to the efficiency of the crosslinking reaction, the present resin composition is quite advantageous for the manufacturing of the aforementioned products.

## Claims

1. A resin composition **characterized by** comprising a polyvinyl alcohol-based resin (A) having an acetoacetyl group; and a N-amino poly(acrylamide)-based resin (B) having both of (meth)acrylic acid structural unit represented by a general formula (1) and acrylamide structural unit represented by a general formula (2).

[formula 1]

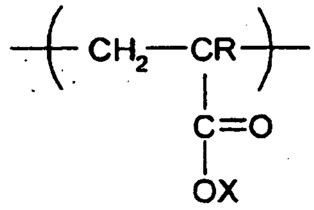

(1)

in the formula, R represents a hydrogen or methyl group and X represents a hydrogen and alkali metal

[formula 2]

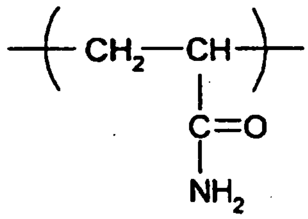

(2)

2. The resin composition according to claim 1, wherein the average sequence length of hydroxyl group ($l_{OH}$) of the polyvinyl alcohol-based resin (A) is ten or more.

3. The resin composition according to claims 1 or 2, wherein the amount of the acetoacetyl group in the polyvinyl alcohol-based resin (A) falls in the range of 0.1 to 20 mol%.

4. The resin composition according to any of claims 1 to 3, wherein the degree of polymerization of the polyvinyl alcohol-based resin (A) falls in the range of 300 to 4000.

5. The resin composition according to any of claims 1 to 4, wherein the degree of hydrolysis of the polyvinyl alcohol-based resin (A) is 80 mol% or more.

6. The resin composition according to any of claims 1 to 5, wherein the molar ratio of the structural units of N-aminoacrylamide/acrylamide/(meth)acrylic acid derivative in the N-amino poly(acrylamide)-based resin (B) is in the range of 90/5/5 to 30/20/50.

7. The resin composition according to any of claims 1 to 6, wherein the N-amino poly(acrylamide)-based resin (B) has a number average molecular weight of 10000 to 200000.

8. The resin composition according to any of claims 1 to 7, wherein the amount of N-amino poly(acrylamide)-based resin (B) is in the range of 1 to 100 parts by weight relative to 100 parts by weight of the polyvinyl alcohol-based resin (A) having the acetoacetyl group.

9. Use of the resin composition according to any of claims 1 to 8 for paper coating.

10. Use of the resin composition according to any of claims 1 to 8 as a crosslink curable adhesive.

11. Use of the resin composition according to any of claims 1 to 8 as an adhesive layer in a polarizing film comprising a polarizer and a transparent protective film adhered to at least one side of the polarizer through said adhesive layer obtained by the crosslinking reaction of said resin composition.

12. Use of the resin composition according to any of claims 1 to 8 in a heat-sensitive recording medium comprising a substrate and at least one layer containing a product obtained by the crosslinking reaction of said resin composition.

13. Use of the resin composition according to any of claims 1 to 8 in an aqueous gel comprising a product obtained by

the crosslinking reaction of said resin composition.

## Patentansprüche

1. Harzzusammensetzung, **dadurch gekennzeichnet, dass** sie ein Harz (A) auf Polyvinylalkoholbasis mit einer Acetoacetylgruppe und ein Harz (B) auf N-Aminopoly(acrylamid)basis mit sowohl einer (Meth)acrylsäure-Struktureinheit, dargestellt durch eine allgemeine Formel (1), als auch einer Acrylamid-Struktureinheit, dargestellt durch die allgemeine Formel (2), umfasst:

Formel 1

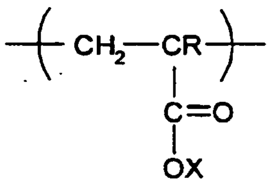

(1)

wobei in der Formel R ein Wasserstoffatom oder eine Methylgruppe ist und X Wasserstoff oder Alkalimetall ist

Formel 2

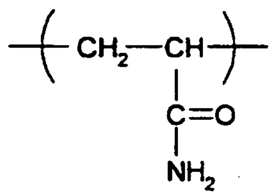

(2)

2. Harzzusammensetzung nach Anspruch 1, worin die durchschnittliche Sequenzlänge der Hydroxylgruppe ($l_{OH}$) des Harzes (A) auf Polyvinylalkoholbasis 10 oder mehr ist.

3. Harzzusammensetzung nach Anspruch 1 oder 2, worin die Menge der Acetoacetylgruppe in dem Harz (A) auf Polyvinylalkoholbasis in den Bereich von 0,1 bis 20 Mol% fällt.

4. Harzzusammensetzung nach einem der Ansprüche 1 bis 3, worin der Polymerisationsgrad des Harzes (A) auf Polyvinylalkoholbasis in den Bereich von 300 bis 4000 fällt.

5. Harzzusammensetzung nach einem der Ansprüche 1 bis 4, worin der Hydrolysegrad des Harzes (A) auf Polyvinylalkoholbasis 80 Mol% oder mehr ist.

6. Harzzusammensetzung nach einem der Ansprüche 1 bis 5, worin das molare Verhältnis der Struktureinheiten des N-Aminoacrylamid/Acrylamid/(Meth)acrylsäure-Derivates in dem Harz auf N-Aminopoly(acrylamid)basis (B) im Bereich von 90/5/5 zu 30/20/50 liegt.

7. Harzzusammensetzung nach einem der Ansprüche 1 bis 6, worin das Harz (B) auf N-Aminopoly(acrylamid)basis ein Molekulargewicht im Zahlenmittel von 10000 bis 200000 hat.

8. Harzzusammensetzung nach einem der Ansprüche 1 bis 7, worin die Menge des Harzes (B) auf N-Aminopoly(acrylamid)basis im Bereich von 1 bis 100 Gew.-Teilen, bezogen auf 100 Gew.-Teilen des Harzes (A) auf Polyvinylalkoholbasis mit der Acetoacetylgruppe, ist.

9. Verwendung der Harzzusammensetzung nach einem der Ansprüche 1 bis 8 für die Papierbeschichtung.

10. Verwendung der Harzzusammensetzung nach einem der Ansprüche 1 bis 8 als vernetzungshärtbares Adhäsiv.

11. Verwendung der Harzzusammensetzung nach einem der Ansprüche 1 bis 8 als Adhäsivschicht in einem polarisierenden Film, umfassend einen Polarisator und einen transparenten Schutzfilm, der auf zumindest einer Seite des

Polarisators durch die Adhäsivschicht haftet, erhalten durch die Vernetzungsreaktion der Harzzusammensetzung.

**12.** Verwendung der Harzzusammensetzung nach einem der Ansprüche 1 bis 8 in einem wärmeempfindlichen Aufzeichnungsmedium, umfassend ein Substrat und zumindest eine Schicht, umfassend ein Produkt, erhalten durch die Vernetzungsreaktion der Harzzusammensetzung.

**13.** Verwendung der Harzzusammensetzung nach einem der Ansprüche 1 bis 8 in einem wässrigen Gel, umfassend ein Produkt, erhalten durch die Vernetzungsreaktion der Harzzusammensetzung.

## Revendications

**1.** Composition de résine **caractérisée en ce que** comprenant une résine à base de poly(alcool vinylique) (A) ayant un groupe acétoacétyle ; et une résine à base de N-amino poly(acrylamide) (B) ayant à la fois une unité structurelle acide (méth)acrylique représentée par une formule générale (1) et une unité structurelle acrylamide représentée par une formule générale (2),

[formule 1]

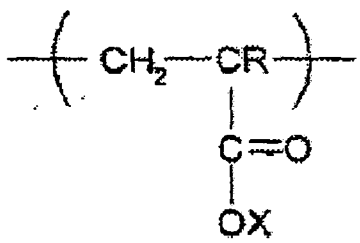

(1)

dans la formule, R représente un hydrogène ou un groupe méthyle et X représente un hydrogène et un métal alcalin

[formule 2]

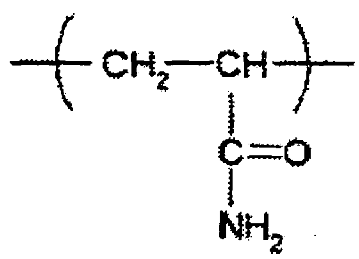

(2)

**2.** Composition de résine selon la revendication 1, dans laquelle la longueur moyenne de séquence de groupe hydroxyle ($l_{OH}$) de la résine à base de poly(alcool vinylique) (A) est dix ou plus.

**3.** Composition de résine selon la revendication 1 ou 2, dans laquelle la quantité du groupe acétoacétyle dans la résine à base de poly(alcool vinylique) (A) tombe dans la plage de 0,1 à 20% en moles.

**4.** Composition de résine selon l'une quelconque des revendications 1 à 3, dans laquelle le degré de polymérisation de la résine à base de poly(alcool vinylique) (A) tombe dans la plage de 300 à 4 000.

**5.** Composition de résine selon l'une quelconque des revendications 1 à 4, dans laquelle le degré d'hydrolyse de la résine à base de poly(alcool vinylique) (A) est 80% en moles ou plus.

6. Composition de résine selon l'une quelconque des revendications 1 à 5, dans laquelle le rapport molaire des unités structurelles de dérivé de N-aminoacrylamide/acrylamide/acide (méth)acrylique) dans la résine à base de N-amino poly(acrylamide) (B) est dans la plage de 90/5/5 à 30/20/50.

7. Composition de résine selon l'une quelconque des revendications 1 à 6, dans laquelle la résine à base de N-amino poly(acrylamide) (B) a un poids moléculaire moyen en nombre de 10 000 à 200 000.

8. Composition de résine selon l'une quelconque des revendications 1 à 7, dans laquelle la quantité de résine à base de N-amino poly(acrylamide) (B) est dans la plage de 1 à 100 parties en poids par rapport à 100 parties en poids de la résine à base de poly(alcool vinylique) (A) ayant le groupe acétoacétyle.

9. Utilisation de la composition de résine selon l'une quelconque des revendications 1 à 8 pour un couchage de papier.

10. Utilisation de la composition de résine selon l'une quelconque des revendications 1 à 8 comme un adhésif durcissable réticulable.

11. Utilisation de la composition de résine selon l'une quelconque des revendications 1 à 8 comme une couche adhésive dans un film de polarisation comprenant un polariseur et un film protecteur transparent adhérant sur au moins un côté du polariseur par l'intermédiaire de ladite couche adhésive obtenue par la réaction de réticulation de ladite composition de résine.

12. Utilisation de la composition de résine selon l'une quelconque des revendications 1 à 8 dans un support d'enregistrement sensible à la chaleur comprenant un substrat et au moins une couche contenant un produit obtenu par la réaction de réticulation de ladite composition de résine.

13. Utilisation de la composition de résine selon l'une quelconque des revendications 1 à 8 dans un gel aqueux comprenant un produit obtenu par la réaction de réticulation de ladite composition de résine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP SHO6178883 B
- JP HEI9324095 B
- JP 2003237241 A
- JP 2004151130 A

### Non-patent literature cited in the description

- Poval. Kobunshi Kankokai, 1981, 248
- *Macromolecules,* 1977, vol. 10, 532